# EUROPEAN PATENT SPECIFICATION

(11) **EP 0 945 990 B1**
(45) Date of publication and mention of the grant of the patent: **07.09.2005**
(21) Application number: 98104654.3
(22) Date of filing: 14.03.1998
(51) Int. Cl.: H04B 1/40, H04B 1/26

(54) **Multiband receiver for multiband radio signals and multiband mobile telephone comprising a receiver**
Multibandempfänger für Multibandfunksignalen und Multibandmobilfunktelefon mit einen Empfänger
Récepteur multibande pour la réception de signaux multibandes et téléphone mobile multibande avec un récepteur

(43) Date of publication of application: 29.09.1999
(73) Proprietor: SIEMENS AKTIENGESELLSCHAFT, 80333 München (DE)
(72) Inventor: Thomsen, Pia, 9440 Aabybro (DK); Pedersen, Per Dahlgaard, Aalborg SV, DK-9200 (DK)

(56) References cited:
- EP-A- 0 700 167
- EP-A- 0 793 356
- GB-A- 2 310 342
- US-A- 5 163 159

## Description

### Field of the invention

The invention concerns a receiver and a mobile telephone according to the preamble of the independent patent claims.

### Prior art

It is already known to use superheterodyne receivers for different radio frequency bands, wherein the different frequency bands are processed separately until an intermediate frequency IF signal is generated. The intermediate frequency is common for all different frequency bands. Such receivers need separate frequency synthesizers for each of the different radio frequency bands.

Published patent application GB 2 310 342 A discloses a dual mode radio front end transceiver which is operable on two different frequency bands and two different modulation formants. The transceiver comprises receive IF circuitry common to both modes, and transmit IF circuitry common to both modes. The transceiver further comprises two frequency synthetizers from which all the local oscillator requirements are derived. A single first local oscillator is used with a dual band VCo and a programmable synthesiser, overlap tuning being employed to constrain the VCO running range to be appropriate for the dual bands.

EP 0 793 356 A2 discloses a transceiver, which in the FDD mode of operation receives at a first frequency and transmits at a second frequency; and in the TDD mode of operation receives and transmits at a third frequency and which incorporates in the receiving branch at least a first mixer for forming a first intermediate frequency from the received frequency and the first local oscillator frequency and a second mixer for forming a second intermediate frequency from the first intermediate frequency and the second local oscillator frequency and in the transmission branch: a modulator for modulating the signals to be transmitted to the third intermediate frequency, a third mixer for forming the transmission frequency from the third intermediate frequency and the fourth local oscillator frequency, first synthesizer for forming equally high first and fourth local oscillator frequencies, and a second synthesizer and a frequency multiplier or divider and switching means for forming and switching a fourth frequency and its M times multiple, so that the fourth frequency is the absolute value of the difference between the reception frequency and the transmission frequency of the FDD mode of operation divided by (M-1), whereby in the FDD mode of operation the fourth frequency is switched as the third local oscillator frequency and its said multiple (M*FS) as the second local oscillator frequency, if the reception frequency of the FDD mode of operation is higher than the transmission frequency, and the fourth frequency is switched as the second local oscillator frequency, and its said multiple (M*FS) as the third local oscillator frequency, if the reception frequency of the FDD mode of operation is lower than the transmission frequency, and in the TDD mode of operation either a fourth frequency or its said multiple (M*FS) is switched as both the second local oscillator frequency and the third local oscillator frequency.

### Advantages of the invention

The receiver for multiband radio signals and the mobile telephone according to the characterizing portion of the independent patent claims have the advantage that only one frequency synthesizer is needed for the down-conversion of radio frequency signals of different radio frequency bands.

Since the first down conversion is done by variable frequency synthesizers that are normally very complex components comprising Phase Locked Loops (PLL), PLL - controllers and Voltage Controlled Oscillators (VCO), the cost of the receiver and the mobile telephone are significantly reduced.

Further advantages are realized by the features of the dependent patent claims. By choosing the first intermediate frequency to be an integer multiple of the second intermediate frequency a very simple generation of the mixing frequencies for the down conversion to the base band is possible. This is simply achieved by using a frequency divider.

### Drawings

Exemplary embodiments of the invention are shown in the FigureFigures and explained in greater detail in the description.
Figure 1 shows a multiband superheterodyne receiver of the prior art; and
Figures 2 to 5 show different embodiments of a receiver according to the invention.

### Description

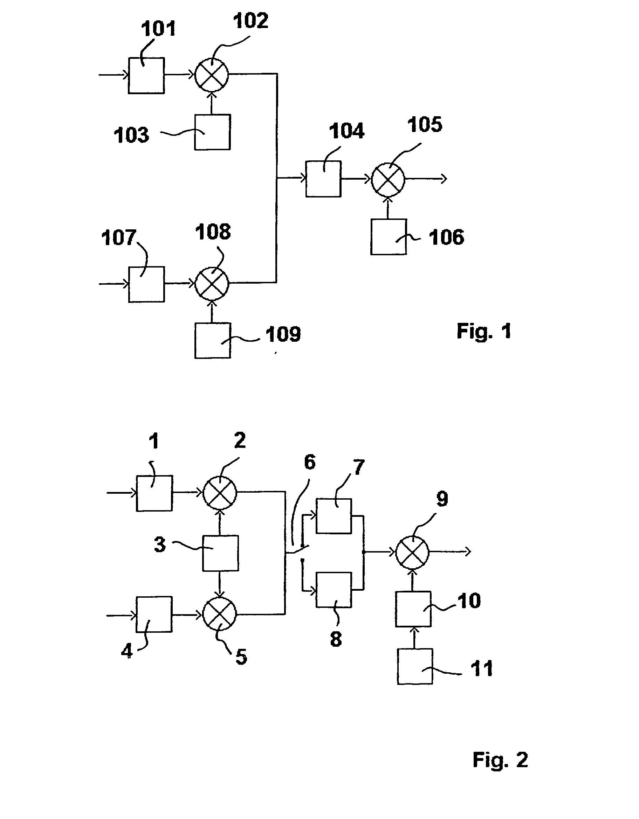

Figure 1 shows a conventional design of a receiver using a superheterodyne architecture. Figure 1 shows a receiver of a mobile radio telephone that is able to operate in the GSM 1800 and GSM 1900 radio frequency bands. Mobile telephones in the GSM 1800 band receive signals from 1805 to 1880 MHz. Mobile telephones working in the GSM 1900 radio frequency band receive signals in a frequency band from 1930 to 1990 MHz. In the example of Figure 1, the GSM 1800 signals are applied to a first band pass filter 101, to attenuate all signals that are not in the reception band of the GSM 1800 system. The further signal is then applied to a mixer 102, that is mixing the filtered radio frequency signal with the frequency of a first frequency synthesizer 103. The output of the mixer 102 is to a first approximation the radio frequency signal that is shifted in frequency by the frequency of the frequency synthesizer 103. Since the output of the mixer 102 also contain lots of harmonics and spurious signals it is again filtered by a band pass filter 104. The band pass filter 104 is optimized to a very small fixed pass band, so that the harmonics and spurious signals are very well suppressed. The output of the filter 104 is a intermediate frequency signal. The intermediate frequency signal is then an input for a second mixer 105 that mixes this intermediate frequency signal with a frequency signal that is supplied by a second frequency synthesizer 106. The frequency of this second synthesizer 106 is fixed to the center frequency of the band pass filter 104. The intermediate frequency signal is therefore converted to a base band signal from frequency zero with the bandwidth of the signal to the highest frequency of the signal.

The GSM 1800 system allows for the transmitted signal to the mobile telephone a frequency between 1805 and 1880 MHz. The different frequency channels are separated from each other by 200 KHz. If, as an example, the intermediate frequency is chosen to be 200 MHz, the frequency synthesizer 103 could generate signals between 1605 and 1680 Mhz in steps of 200 kHz.

The GSM 1900 signals ranging from 1930 to 1990 MHz is applied to an appropriate filter 107 for suppression of unwanted signals. These filtered signals are then the input for a mixer 108 which mixes those signals with a frequency signal supplied by a third frequency synthesizer 109. The output of the third mixer 108 is then applied to the second band pass filter 104 to yield an intermediate frequency signal. The frequency of this intermediate frequency signal is the same as the signal supplied by the GSM 1800 receiving part of the receiver.

The GSM 1900 signals are varying in 200 KHz steps from 1930 to 1990 MHz. The third frequency synthesizer has therefore to vary in frequency between 1730 and 1790 MHz in order to supply the same intermediate frequency signal of 200 MHz as for the GSM 1800 system.

The frequency synthesizers 103, 109 are very critical and complicate components including PLL's, voltage controlled oscillators and quartz frequency references. It would be desirable to have only one frequency synthesizer that is supplying the frequency signals for the GSM 1800 and the GSM 1900 system. A frequency synthesizer that is working for both system has to cover (assuming 200 MHz for intermediate frequency) a frequency range from 1605 to 1790 MHz that is a bandwidth of 185 MHz in 200 KHz steps. Such a frequency synthesizer cannot be constructed or is too expensive so that is more efficient to have two different frequency synthesizers, one for each frequency band.

Figure 2 shows a different architecture of the superheterodyne architecture covering different frequency bands which needs only one frequency synthesizer for the first down conversion of the radio frequency signals of a intermediate frequency band. The Figure 2 is again described using the examples of GSM 1800 and GSM 1900. The GSM 1800 radio signal is applied to a first filter 1 to suppress signals that are not within the frequency band of 1805 to 1880 MHz. The GSM 1900 signals are applied to a second filter 4 to suppress the signals that are not in the frequency band of 1930 to 1990 MHz. The filtered output signal of the filter 1 is supplied to a mixer 2, that mixes the radio frequency signal with a frequency supplied by a frequency synthesizer 3. The frequency of the frequency synthesizer 3 is chosen so that the radio frequency signal of the GSM 1800 system is downconverted to an intermediate frequency of 200 MHz. Therefore the frequency synthesizer has to be varied between 1605 to 1680 MHz. The GSM 1900 output signal of the filter 4 is also supplied to a mixer 5 where the signal is mixed with a frequency signal supplied by the radio frequency synthesizer 3. The frequency synthesizer 3 is varied between 1630 and 1690 MHz to yield an intermediate frequency of 300 MHz. The intermediate frequency produced by the first downconversion of the radio frequency signals is therefore different for GSM 1800 and GSM 1900. By doing so the frequency of the frequency synthesizer 3 has only to vary between 1605 to 1690 MHz. This is equal to a bandwidth of 85 MHz that is a reasonable value for a frequency synthesizer operating in the frequency range of 1600 to 1700 MHz. By selecting different intermediate frequencies it is therefore possible to use only one frequency synthesizer 3 to convert radio frequency signals of the GSM 1800 and GSM 1900 band.

The output signals of the mixer 2 and the mixer 5 are then applied to a switch 6, which is connecting the output signals of the first mixers 2,5 either to intermediate frequency filter 7 or an intermediate frequency filter 8. Both of the filters 6 and 7 are band pass filters with the center frequency of each filter being one of the intermediate frequencies. In the example of Figure 2 the filter 7 has a center frequency of 200 MHz and the filter 8 a center frequency of 300 MHz. Both of the filters 6, 8 are designed to filter the GSM signals having a bandwidth of 200 KHz. The output of the intermediate frequency filter 6, 8 is an intermediate frequency signal having either a center frequency of 200 MHz or a center frequency of 300 MHz. These signals are applied to a mixer 9 for the down conversion to the baseband. The mixer 9 mixes the intermediate frequency signals with a frequency signal of 200 or 300 MHz depending on which filter 6, 7 is supplying the signal. For generation of these fixed frequencies the frequency synthesizer 11 and a variable frequency divider 10 are supplied. The frequency synthesizer 11 is producing a fixed frequency signal that is applied to a variable frequency divider 10. The variable frequency divider 10 divides the frequency by an integer factor and applies the signal then as an input for the mixer 9. In the example of Figure 2 the frequency synthesizer 11 generates a frequency of 600 MHz. For the GSM 1800 signals the frequency signal of the frequency synthesizer is divided by a factor 3 by the variable frequency divider 10 yielding a frequency of 200 MHz which is applied to the mixer 9. For the GSM 1900 system the frequency output of the frequency synthesizer 11 is divided by a factor 2 yielding a frequency of 300 MHz as an input for the mixer 9.

Comparing the receivers of Figure 1 and 2 it is obvious that Figure 2 uses only one variable frequency synthesizer for the down conversion of the radio frequency signals to the intermediate frequency. On the other hand the receiver according to Figure 2 needs a switch, two intermediate frequency filters compared to only one in Figure 1 and frequency divider 10. Since these components are very simple and cheap compared to a variable frequency synthesizer, the costs and complexity of the receiver according to Figure 2 is reduced compared to Figure 1.

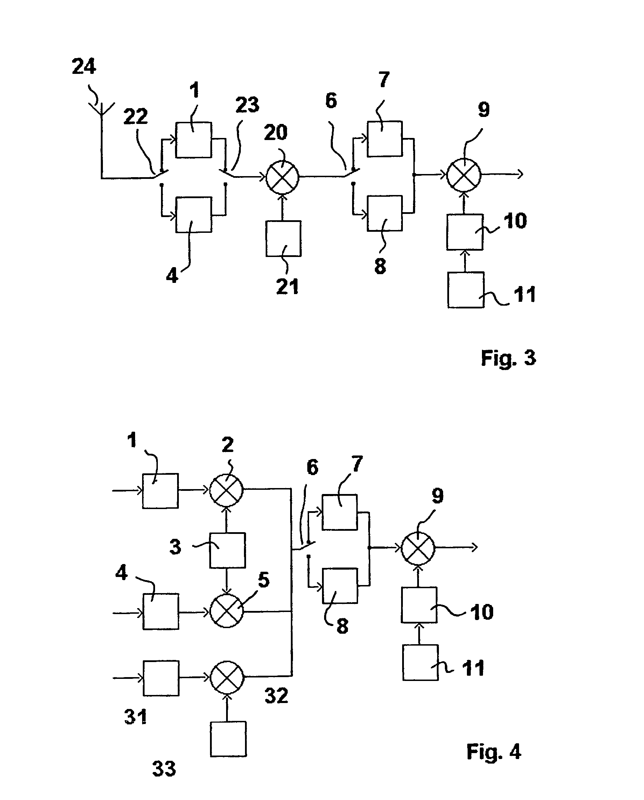

Figure 3 shows a further example of the invention. The numbers 1, 4, 6 to 11 shows the same component as in Figure 2. Figure 3 shows an antenna 24 that is connected to a switch 22. To simplify the Figure amplification component and so on are not shown in Figure 3. Depending on the position of switch 22 the radio signal received by the antenna 24 is applied either to filter 1 or filter 4. The output signals of the filters 1, 4 are connected via a switch 23 to a mixer 20. Depending on the position of switch 23 either the filter 1 or the filter 4 is connected to the mixer 20. The mixer 20 receives a variable frequency signal from a variable frequency synthesizer 21. The frequency of frequency synthesizer 21 is then varied as already described in Figure 2 to yield an intermediate frequency of 200 MHz for GSM 1800 signals and an intermediate frequency of 300 MHz for GSM 1900 signals. The further processing of the signals is equal to the description to Figure 2.

The difference compared to Figure 2 is that here only one mixer 20 is needed for the down conversion of the radio frequency signals to intermediate frequency signals. The costs of the receiver are further reduced.

Figure 4 shows a further example of a receiver for multiband radio signals. The components with the numbers 1 to 11 shows the same components that work in the same way as already described to Figure 2. Supplementary to Figure 2 the receiver according to Figure 4 comprises a filter 31, that is designed to filter signals in the GSM 900 radio band ranging from 935 to 960 MHz. The filtered signals of filter 31 are applied to a mixer 32 that also receives a variable frequency signal from a variable frequency synthesizer 33. The frequency of the variable frequency synthesizer 33 is varied between 735 and 760 MHz so that the output of the mixer 32 contains a down-converted radio signal with a center frequency of 200 MHz. This signal is applied via switch 6 to the filter 7 like the GSM 1800 signal. The receiver according to Figure 4 is therefore a tripel-band-receiver that can receive GSM 900, GSM 1800 and GSM 1900 signals. Receivers as shown in Figure 4 are used for tripelband mobile telephones that are able to operate in all these different frequency bands. The saving of one variable frequency synthesizer reduces the overall costs of the mobile telephone.

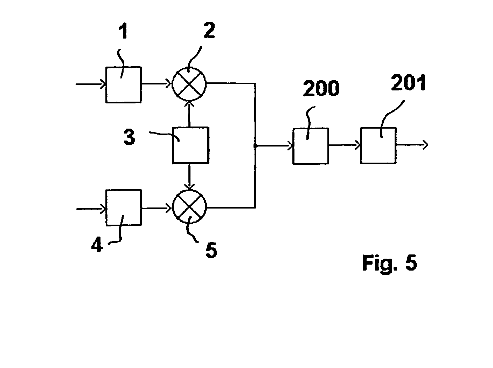

Figure 5 shows a further example of a receiver for multiband radio signals. The components with the numbers 1 to 5 are the same components that work in the same way as already described to Figure 2. Supplementary to Figure 2 the receiver according to Figure 5 comprises a sampling device 200 and a digital processor 201. The sampling device 200 makes a analog-to-digital conversion of the intermediate frequency signals and the processor 201 make further processing of the digital intermediate frequency signals. The analog filters 7 and 8 of Figure 2 are here replaced by software. Since is is very simple to make digital filters that work in different frequency ranges this solution is very simple and cost-effective.

## Claims

1. A multiband receiver for multiband radio signals, comprising:
at least one mixing device (2, 5, 20, 32) adapted to:
- receive local oscillator signal from a common frequency synthesizer (3, 33);
- convert radio frequency signals to intermediate frequency signals by mixing them with the local oscillator signal from the frequency synthesizer (3, 33) so that:
- radio frequency signals of a first radio frequency band (GSM 1800) are converted to a first fixed intermediate frequency; and
- radio frequency signals of a second radio frequency band (GSM 1900) are converted to a second fixed intermediate frequency;
**characterized in that**:
- the frequency bands of the frequency synthesizer (3, 33) are selected to at least partially overlap each other for radio frequency signals of the first radio frequency band (GSM 1800) and of the second radio frequency band (GSM 1900); and
- the at least one mixing device (2, 5, 20, 32) is thus adapted to give a second fixed intermediate frequency different from the first fixed intermediate frequency, where the second fixed intermediate frequency corresponds to the second radio frequency band (GSM 1900).

2. A multiband receiver according to claim 1, further **comprising**: a mixer (9), a frequency synthetizer (11) and a variable frequency divider (10) for down-conversion of the first and the second intermediate frequency signals, the first intermediate frequency being an integer multiple of the second intermediate frequency.

3. A multiband receiver according to claim 1 or 2, further **comprising**:
- a first band pass filter (7) for filtering the signals of the first intermediate frequency; and
- a second band pass filter (8) for filtering the signals of the second intermediate frequency.

4. A multiband receiver according to one of the preceding claims, further **comprising**: a base band mixer adapted to convert the intermediate frequency signals to a base band, the base band mixer receiving a frequency signal that is generated by a frequency synthesizer and a subsequent variable frequency divider, wherein the division factor of the variable frequency divider is selected in accordance with the first or second radio frequency band.

5. A multiband receiver according to any one of claims 1 to 3, further **comprising:**
- a sampling device (200) for analog-to-digital converting the intermediate frequency signals; and
- a digital processor (201) for further processing the intermediate frequency signals.

6. A multiband receiver according to one of the preceding claims, **wherein:** the at least one mixing device (2, 5, 20, 32) comprises:
- a first radio band mixer for the first radio frequency signal; and
- a second radio frequency mixer for the second radio frequency signal;
said first and second radio band mixer adapted to:
- convert the radio frequency signals of the different radio bands to intermediate frequency signals; and
- receive a mixing frequency signal from a common frequency synthesizer means (3).

7. A multiband receiver according to one of the preceding claims, **wherein:** the second fixed intermediate frequency is different from the first fixed intermediate frequency in that it is higher than the first fixed intermediate frequency.

8. A multiband mobile telephone, **comprising**: a multiband receiver according to one of the preceding claims.

9. A multiband mobile telephone according to claim 8, **wherein**: the multiband receiver is adapted to receive radio frequency signals from at least two radio frequency bands selected from a group of radio frequency bands comprising:
- GSM 900 (935 to 960 MHz);
- GSM 1800 (1805 to 1880 MHz); and
- GSM 1900 (1930 to 1990 MHz).

## Patentansprüche

1. Multibandempfänger für Multibandfunksignale, der Folgendes umfasst:
mindestens einen Mischer (2, 5, 20, 32), der so beschaffen ist, dass er:
- ein von einem gemeinsamen Frequenzsynthesizer (3, 33) erzeugtes Überlagerersignal empfängt;
- Hochfrequenzsignale in Zwischenfrequenzsignale konvertiert, indem sie mit dem vom Frequenzsynthesizer (3, 33) stammenden Überlagerersignal gemischt werden, so dass:
- Hochfrequenzsignale eines ersten Hochfrequenzbandes (GSM 1800) in eine erste feste Zwischenfrequenz konvertiert werden; und
- Hochfrequenzsignale eines zweiten Hochfrequenzbandes (GSM 1900) in eine zweite feste Zwischenfrequenz konvertiert werden;
**dadurch gekennzeichnet, dass**:
- die Frequenzbänder des Frequenzsynthesizers (3, 33) so ausgewählt werden, dass sie sich zumindest teilweise wechselseitig überlappen für Hochfrequenzsignale des ersten Hochfrequenzbandes (GSM 1800) und des zweiten Hochfrequenzbandes (GSM 1900); und
- der mindestens eine Mischer (2, 5, 20, 32) so angepasst ist, dass er eine zweite feste Zwischenfrequenz ergibt, die verschieden von der ersten festen Zwischenfrequenz ist, wobei die zweite feste Zwischenfrequenz dem zweiten Hochfrequenzband (GSM 1900) entspricht.

2. Multibandempfänger nach Anspruch 1, der ferner **Folgendes umfasst:** einen Mischer (9), einen Frequenzsynthesizer (11) und einen variablen Frequenzteiler (10) für das Abwärtskonvertieren der ersten und der zweiten Zwischenfrequenzsignale, wobei die erste Zwischenfrequenz ein ganzzahliges Vielfaches der zweiten Zwischenfrequenz ist.

3. Multibandempfänger nach Anspruch 1 oder 2, der ferner **Folgendes umfasst:**
- einen ersten Bandfilter (7) zur Filterung der Signale der ersten Zwischenfrequenz; und
- einen zweiten Bandfilter (8) zur Filterung der Signale der zweiten Zwischenfrequenz.

4. Multibandempfänger nach einem der vorhergehenden Ansprüche, der ferner **Folgendes umfasst:** einen Basisbandmischer, der so beschaffen ist, dass er die Zwischenfrequenzsignale in ein Basisband konvertiert, wobei der Basisbandmischer ein Frequenzsignal empfängt, das von einem Frequenzsynthesizer und einem nachgeschalteten variablen Frequenzteiler erzeugt wird, wobei der Divisionsfaktor des variablen Frequenzteilers in Übereinstimmung mit dem ersten oder dem zweiten Hochfrequenzband ausgewählt wird.

5. Multibandempfänger nach einem der Ansprüche 1 bis 3, der ferner **Folgendes umfasst:**
- einen Abtaster (200) für eine Analog/Digital-Wandlung der Zwischenfrequenzsignale; und
- einen digitalen Prozessor (201) für die weitere Verarbeitung der Zwischenfrequenzsignale.

6. Multibandempfänger nach einem der vorhergehenden Ansprüche, **wobei** der mindestens eine Mischer (2, 5, 20, 32) **Folgendes umfasst:**
- einen ersten Funkband-Mischer für das erste Hochfrequenzsignal; und
- einen zweiten Funkband-Mischer für das zweite Hochfrequenzsignal;
wobei besagter erster und zweiter Hochfrequenzband-Mischer so beschaffen sind, dass sie:
- die Hochfrequenzsignale der verschiedenen Funkbänder in Zwischenfrequenzsignale konvertieren; und
- ein Mischfrequenzsignal von einem gemeinsamen Frequenzsynthesizerelement (3) empfangen.

7. Multibandempfänger nach einem der vorhergehenden Ansprüche, **wobei** die zweite feste Zwischenfrequenz insofern verschieden von der ersten festen Zwischenfrequenz ist, als sie höher als die erste feste Zwischenfrequenz ist.

8. Multibandmobiltelefon, das **Folgendes umfasst:** einen Multibandempfänger gemäß einem der vorhergehenden Ansprüche.

9. Multibandmobiltelefon nach Anspruch 8, **wobei:** der Multibandempfänger so beschaffen ist, dass er Hochfrequenzsignale von mindestens zwei Hochfrequenzbändern empfängt, die aus einer Gruppe von Funkfrequenzbändern ausgewählt wurden, darunter:
- GSM 900 (935 MHz bis 960 MHz);
- GSM 1800 (1805 MHz bis 1880 MHz);
- GSM 1900 (1930 MHz bis 1990 MHz).

## Revendications

1. Récepteur multibande pour des signaux radio multibandes, comprenant :
au moins un dispositif de mélange (2, 5, 20, 32) adapté pour :
- recevoir un signal d'oscillateur local en provenance d'un synthétiseur de fréquence commun (3, 33);
- convertir des signaux à radiofréquence en des signaux à fréquence intermédiaire en les mélangeant avec le signal d'oscillateur local en provenance du synthétiseur de fréquence (3, 33) de sorte que :
- des signaux à radiofréquence d'une première bande de radiofréquences (GSM 1800) sont convertis à une première fréquence intermédiaire fixe; et
- des signaux à radiofréquence d'une deuxième bande de radiofréquences (GSM 1900) sont convertis à une deuxième fréquence intermédiaire fixe;
**caractérisé en ce que :**
- les bandes de fréquences du synthétiseur de fréquence (3, 33) sont sélectionnées pour se chevaucher les unes les autres au moins partiellement pour des signaux à radiofréquence de la première bande de radiofréquences (GSM 1800) et de la deuxième bande de radiofréquences (GSM 1900); et
- l'au moins un dispositif de mélange (2, 5, 20, 32) est ainsi adapté à produire une deuxième fréquence intermédiaire fixe différente de la première fréquence intermédiaire fixe, où la deuxième fréquence intermédiaire fixe correspond à la deuxième bande de radiofréquences (GSM 1900).

2. Récepteur multibande selon la revendication 1, **comprenant** en outre : un mélangeur (9), un synthétiseur de fréquence (11) et un diviseur de fréquence variable (10) pour la conversion et la réduction des signaux à la première et à la deuxième fréquence intermédiaire, la première fréquence intermédiaire étant un entier multiple de la deuxième fréquence intermédiaire.

3. Récepteur multibande selon la revendication 1 ou 2, **comprenant** en outre :
- un premier filtre passe-bande (7) pour filtrer les signaux de la première fréquence intermédiaire; et
- un deuxième filtre passe-bande (8) pour filtrer les signaux de la deuxième fréquence intermédiaire.

4. Récepteur multibande selon l'une des revendications précédentes, **comprenant** en outre : un mélangeur de bande de base adapté pour convertir les signaux à fréquence intermédiaire à une bande de base, le mélangeur de bande de base recevant un signal de fréquence qui est produit par un synthétiseur de fréquence et un diviseur de fréquence variable consécutif, dans lequel le facteur de division du diviseur de fréquence variable est sélectionné selon la première ou la deuxième bande de radiofréquences.

5. Récepteur multibande selon l'une quelconque des revendications 1 à 3, **comprenant** en outre :
- un dispositif d'échantillonnage (200) pour effectuer une conversion analogique-numérique des signaux à fréquence intermédiaire; et
- un processeur numérique (201) pour traiter en outre les signaux à fréquence intermédiaire.

6. Récepteur multibande selon l'une des revendications précédentes, **dans lequel :** l'au moins un dispositif de mélange (2, 5, 20, 32) comprend :
- un premier mélangeur de bande de radiofréquences pour le premier signal à radiofréquence; et
- un deuxième mélangeur de bande de radiofréquences pour le deuxième signal à radiofréquence;
lesdits premier et deuxième mélangeurs de bande de radiofréquences étant adaptés pour :
- convertir les signaux à radiofréquence des différentes bandes de radiofréquences en des signaux à fréquence intermédiaire; et
- recevoir un signal de fréquence de mélange en provenance d'un moyen synthétiseur de fréquence commun (3).

7. Récepteur multibande selon l'une des revendications précédentes, **dans lequel :** la deuxième fréquence intermédiaire fixe est différente de la première fréquence intermédiaire fixe en ce qu'elle est plus élevée que la première fréquence intermédiaire fixe.

8. Téléphone mobile multibande, **comprenant :** un récepteur multibande selon l'une des revendications précédentes.

9. Téléphone mobile multibande selon la revendication 8, **dans lequel** : le récepteur multibande est adapté pour recevoir des signaux à radiofréquence d'au moins deux bandes de radiofréquences sélectionnées dans un groupe de bandes de radiofréquences comprenant :
- GSM 900 (935 à 960 MHz);
- GSM 1800 (1805 à 1880 MHz); et
- GSM 1900 (1930 à 1990 MHz).
